# EUROPEAN PATENT APPLICATION

(11) **EP 4 180 270 A1**
(43) Date of publication of application: **17.05.2023**
(21) Application number: 22206436.2
(22) Date of filing: 09.11.2022
(51) Int. Cl.: B60N 2/34

(54) **SOFA BED FOR A VEHICLE**

(30) Priority: 11.11.2021 NL 2029709
(71) Applicant: Huidekoper, Anne Willem, 9079 PA St. Jacobiparochie (NL)
(72) Inventor: Huidekoper, Anne Willem, 9079 PA St. Jacobiparochie (NL)
(74) Representative: 't Jong, Bastiaan Jacob

(57) **Abstract**

The invention relates to a sofa bed for a vehicle, such as a camper van, which sofa bed comprises:
- a base frame with a base surface for fixing the sofa bed to the floor of a vehicle, which base frame has a longitudinal guide extending substantially parallel to the base surface;
- a first sub-frame arranged on the longitudinal guide and slidable between a first position and a second position;
- a second sub-frame arranged on the first sub-frame for pivoting around a pivot shaft, wherein the pivot shaft extends substantially perpendicularly of the longitudinal guide and parallel to the base surface and wherein the second sub-frame is pivotable between a reclining position and an upright position;
- a first cushion with a rectangular seat surface with two parallel first edges and two parallel second edges, which first cushion is arranged on the first sub-frame and with the seat surface substantially parallel to the base surface;
- a second cushion with a rectangular back surface, which second cushion is arranged on the second sub-frame,
wherein the pivot shaft is arranged at a distance from the seat surface and between the seat surface and the base surface, wherein the pivot shaft is arranged, as seen in a direction perpendicularly of the seat surface, between the two parallel first edges of the seat surface and wherein the pivot shaft is parallel to these two parallel first edges.

## Description

The invention relates to a sofa bed for a vehicle, such as a camper van, which sofa bed comprises:
- a base frame with a base surface for fixing the sofa bed to the floor of a vehicle, which base frame has a longitudinal guide extending substantially parallel to the base surface;
- a first sub-frame arranged on the longitudinal guide and slidable between a first position and a second position;
- a second sub-frame arranged on the first sub-frame for pivoting around a pivot shaft, wherein the pivot shaft extends substantially perpendicularly of the longitudinal guide and parallel to the base surface and wherein the second sub-frame is pivotable between a reclining position and an upright position;
- a first cushion with a rectangular seat surface with two parallel first edges and two parallel second edges, which first cushion is arranged on the first sub-frame and with the seat surface substantially parallel to the base surface;
- a second cushion with a rectangular back surface, which second cushion is arranged on the second sub-frame.

Such a sofa bed is for instance known from DE 202008000221. In this known sofa bed the first sub-frame and the second sub-frame are connected pivotally to each other. When cushions are arranged on these two sub-frames, the cushions will be compressed close to the pivot shaft during pivoting between the reclining position and the upright position, or a gap will occur between the cushions. This will be uncomfortable for the user, either while sitting or while lying down. It is only when the cushions are placed loose on the sub-frames that it is possible to manually compensate for this.

This problem is obviated in NL 2016413 in that both the first sub-frame is displaceable along a guide and the second sub-frame is displaceable along a guide. A drawback is here that, when displacing the second sub-frame from the upright position to the reclining position, the weight of the second sub-frame must be lifted so that the second sub-frame will be slid by the relevant guide. This is a difficult and awkward operation for a user.

It is now an object of the invention to reduce the above stated drawbacks. This object is achieved with a sofa bed according to the preamble, which is characterized in that the pivot shaft is arranged at a distance from the seat surface and between the seat surface and the base surface, wherein the pivot shaft is arranged, as seen in a direction perpendicularly of the seat surface, between the two parallel first edges of the seat surface and wherein the pivot shaft is parallel to these two parallel first edges.

Owing to this specific placement of the pivot shaft in a sofa bed according to the invention, it has been found possible to have the seat surface and the back surface connect and lie mutually in line in the reclining position, while in the upright position the back surface is positioned above the seat surface, wherein the relevant cushions are not deformed and wherein the relevant cushions can be arranged fixedly on the sub-frames.

It is noted that a square is a particular form of rectangle, whereby a sofa bed with a square back surface and square seat surface is also included in the invention.

In a preferred embodiment of the sofa bed according to the invention the pivot shaft is arranged outside the periphery of the back surface, as seen in a direction perpendicularly of the back surface.

With this embodiment the two cushions can be arranged fixedly on the frame. When moving the sofa bed from the upright position to the reclining position, it is not necessary here to remove the cushions and reposition them in order to make the movement possible.

In a further preferred embodiment of the sofa bed according to the invention the first cushion has a side surface which hangs downward from the periphery of the seat surface and which has a part along the first edge close to the second cushion which extends to a position below the back surface.

Because the first edge extends to a position under the back surface, an overlap between the side surface and the back surface is obtained in the reclining position, this improving the comfort in the reclining position.

The second cushion preferably has a side surface which hangs downward from the periphery of the back surface and which has a part parallel and close to the pivot shaft which recedes below the back surface and, in the reclining position, lies against the part of the downward hanging side surface of the first cushion, which extends to a position below the back surface.

The side surfaces of the two cushions hereby overlap each other, whereby a roof tile-like overlap is obtained. The transition between the two cushions will hereby be gradual, whereby a person lying on the sofa bed will not feel this transition as much or even at all. The receding side surface of the second cushion moreover allows the pivoting movement between the reclining position and the upright position to take place without problems, even in the case of thicker cushions.

In another embodiment of the sofa bed according to the invention a frame part of the second sub-frame extends from the second cushion to a position beyond the pivot shaft and the sofa bed comprises first locking means which, in the upright position of the second sub-frame, engage between the frame part and the base frame.

When the sofa bed is placed in the direction of travel of the vehicle, the sofa bed can serve as a seat while driving when in the upright position. The sofa bed must for this purpose however comply with determined safety requirements. One of these requirements is that the backrest is able to withstand a sufficiently great force. By now having the frame part of the second sub-frame extend beyond the pivot shaft, the second sub-frame can be reliably locked relative to the base frame. The set safety requirements can hereby be met in simple manner.

In yet another embodiment of the sofa bed according to the invention the longitudinal guide comprises at least one groove in which run at least two rollers arranged on the sub-frame at a mutual distance, which at least one groove has a first section which runs parallel to the base surface, then has a second, rising section and a third, descending section connecting thereto.

The second, rising section ensures that the first sub-frame cannot slide between the position for the reclining position and the position for the travelling position by itself, but that the first sub-frame must be actively lifted beyond the rising section. The difference in angle between the first parallel section and the third, descending section further ensures that the seat surface takes on a different position in the two different positions of the first sub-frame. In the travelling position the seat surface can thus be inclined slightly rearward, while in the reclining position the seat surface is completely flat and parallel to the base surface.

In yet another embodiment of the sofa bed according to the invention a third sub-frame is arranged between the second cushion and the second sub-frame, which third sub-frame is tiltable relative to the second sub-frame and parallel to the pivot shaft between a first position and a second position.

With this third sub-frame the second cushion with the back surface can be adjusted so that, in the sitting position of the sofa bed, the backrest can be inclined to greater or lesser extent, this enhancing the seating comfort.

These and other features of the invention are further elucidated with reference to the accompanying drawings.
Figure 1 shows a side view of an embodiment of the sofa bed according to the invention in a first position.
Figure 2 shows the sofa bed according to figure 2 in a second position.
Figure 3 shows the sofa bed according to figure 1 in a third position.
Figure 4 shows a detail of the sofa bed according to figure 1.
Figures 5A and 5B show the seat cushion in two different positions.

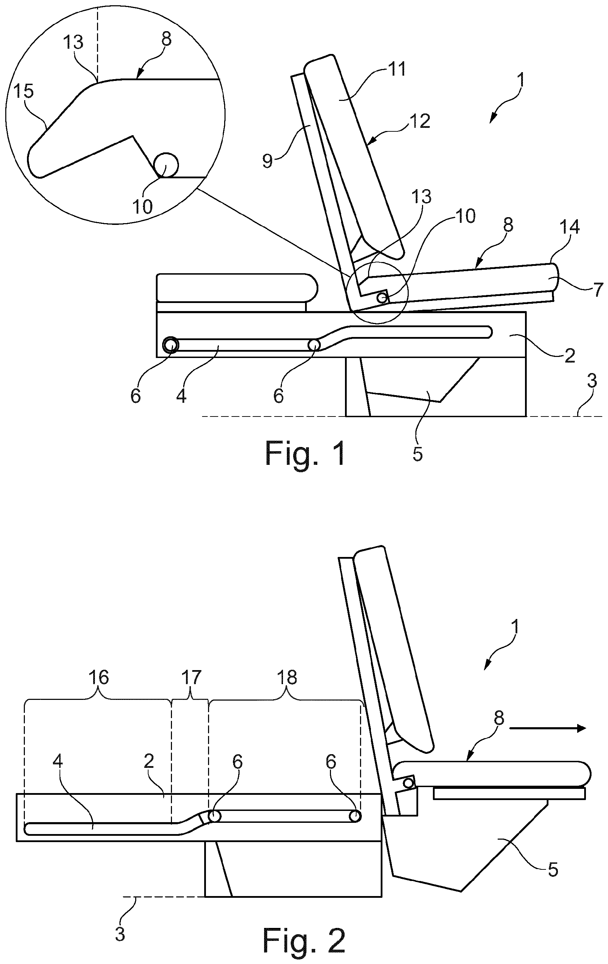

Figure 1 shows an embodiment of a sofa bed 1 according to the invention. The sofa bed 1 has a base frame 2 with a base surface 3. Provided in base frame 2 is a slot 4 along which a first sub-frame 5 is slidable via rollers 6. Arranged on first sub-frame 5 is a first cushion 7 with a seat surface 8.

The sofa bed 1 further has a second sub-frame 9 which is arranged on the first sub-frame 5 for rotation around a pivot shaft 10. Arranged on the second sub-frame 9 is a second cushion 11 with a back surface 12.

The detail in figure 1 clearly shows that the pivot shaft 10 is arranged at a distance from the seat surface 8.It is further clear that, as seen in a direction perpendicularly of seat surface 8, pivot shaft 10 is positioned between two parallel first edges 13, 14 of seat surface 8.

The detail in figure 1 further shows that the first cushion 7 has a side surface 15 hanging downward from seat surface 8 and running away from seat surface 8.

Figure 2 shows sofa bed 1 in a second position, wherein the first sub-frame 5 has been displaced along the slot 4, more or less parallel to the base surface 3.

Because the slot 4 has a first section 16 which runs parallel to the base surface 3, then has a second, rising section 17 and a third, descending section 18 connecting thereto, the seat surface 8 is tilted slightly forward relative to figure 1 and is thereby parallel to ground surface 3.

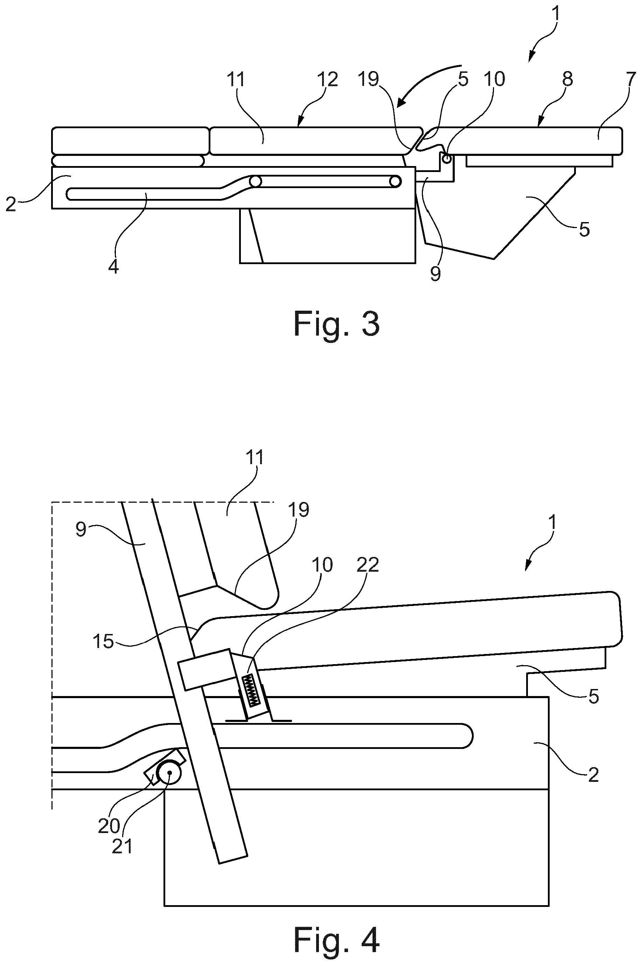

In figure 3 the second sub-frame 9 of sofa bed 1 has been rotated to the reclining position around pivot shaft 10, whereby the back surface 12 comes to lie in the same plane as the seat surface 8. The side surface 15 of first cushion 7 here protrudes below the back surface 12 and lies against the downward hanging side surface 19 of second cushion 11. An ergonomic transition between the two cushions 7, 11 is hereby obtained.

Figure 4 shows the sofa bed 1 in the position according to figure 1 in more detail. The second sub-frame 9 is rotatable around the pivot shaft 10. A lock 20 which is arranged on base frame 2 and engages on a pin 21 of second sub-frame 9 ensures that the second sub-frame 9 with the second cushion 11 cannot easily just tilt away, which is a requirement in order to use the sofa bed 1 as a seat while driving.

A protrusion 22 is further provided on base frame 2 and ensures that first sub-frame 2 is unable to slide forward to the position as shown in figures 2 and 3 when this is undesirable.

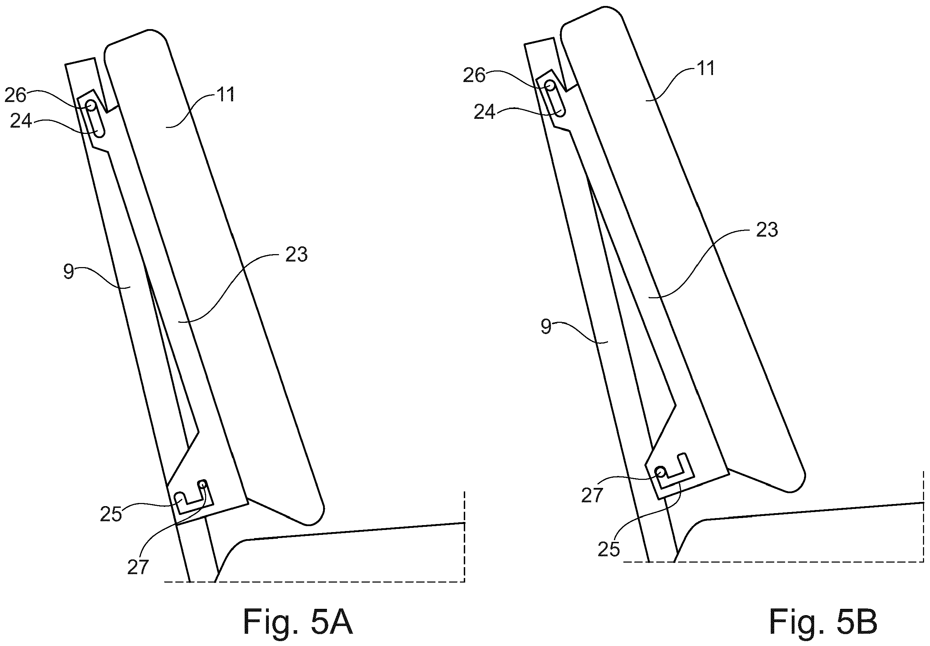

Figure 5A shows the second sub-frame 9 in more detail. Arranged between second sub-frame 9 and cushion 11 is a third sub-frame 23. In the third sub-frame 23 an elongate slot 24, which runs substantially parallel to cushion 11, is provided on the upper side and a U-shaped slot 25 is provided on the lower side. The legs of this U-shaped slot 25 likewise run substantially parallel to cushion 11.

Arranged on second sub-frame 9 are a first horizontal pin 26 and a second horizontal pin 27 which protrude into respectively the elongate slot 24 and the U-shaped slot 25.

In figure 5A the third sub-frame 23 with the cushion 11 thereon is shown in a first position. By sliding third sub-frame 23 upward along second sub-frame 9 the pin 27 can slide from the one leg in U-shaped slot 25 to the upper leg, so that third sub-frame 23 with cushion 11 is moved into the second position, as shown in figure 5B.

## Claims

1. Sofa bed for a vehicle, such as a camper van, which sofa bed comprises:
- a base frame with a base surface for fixing the sofa bed to the floor of a vehicle, which base frame has a longitudinal guide extending substantially parallel to the base surface;
- a first sub-frame arranged on the longitudinal guide and slidable between a first position and a second position;
- a second sub-frame arranged on the first sub-frame for pivoting around a pivot shaft, wherein the pivot shaft extends substantially perpendicularly of the longitudinal guide and parallel to the base surface and wherein the second sub-frame is pivotable between a reclining position and an upright position;
- a first cushion with a rectangular seat surface with two parallel first edges and two parallel second edges, which first cushion is arranged on the first sub-frame and with the seat surface substantially parallel to the base surface;
- a second cushion with a rectangular back surface, which second cushion is arranged on the second sub-frame,
**characterized in that**
the pivot shaft is arranged at a distance from the seat surface and between the seat surface and the base surface, wherein the pivot shaft is arranged, as seen in a direction perpendicularly of the seat surface, between the two parallel first edges of the seat surface and wherein the pivot shaft is parallel to these two parallel first edges.

2. Sofa bed according to claim 1, wherein in the reclining position the back surface of the second cushion lies in line with the seat surface of the first cushion.

3. Sofa bed according to claim 1 or 2, wherein the pivot shaft is arranged outside the periphery of the back surface, as seen in a direction perpendicularly of the back surface.

4. Sofa bed according to any one of the foregoing claims, wherein the first cushion has a side surface which hangs downward from the periphery of the seat surface and which has a part along the first edge close to the second cushion which extends to a position below the back surface.

5. Sofa bed according to claim 4, wherein the second cushion has a side surface which hangs downward from the periphery of the back surface and which has a part parallel and close to the pivot shaft which recedes below the back surface and, in the reclining position, lies against the part of the downward hanging side surface of the first cushion, which extends to a position below the back surface.

6. Sofa bed according to any one of the foregoing claims, wherein a frame part of the second sub-frame extends from the second cushion to a position beyond the pivot shaft and wherein the sofa bed comprises first locking means which, in the upright position of the second sub-frame, engage between the frame part and the base frame.

7. Sofa bed according to any one of the foregoing claims, wherein the longitudinal guide comprises at least one groove in which run at least two rollers arranged on the sub-frame at a mutual distance, which at least one groove has a first section which runs parallel to the base surface, then has a second, rising section and a third, descending section connecting thereto.

8. Sofa bed according to any one of the foregoing claims, wherein a third sub-frame is arranged between the second cushion and the second sub-frame, which third sub-frame is tiltable relative to the second sub-frame and parallel to the pivot shaft between a first position and a second position.
